# EUROPEAN PATENT APPLICATION

(11) **EP 4 628 880 A1**
(43) Date of publication of application: **08.10.2025**
(21) Application number: 23910828.5
(22) Date of filing: 28.12.2023
(51) Int. Cl.: G01N 23/046, G01N 23/20008, G01V 5/00

(54) **DIFFRACTION DETECTION APPARATUS, INSPECTION EQUIPMENT, INSPECTION METHOD, AND INSPECTION SYSTEM**

(30) Priority: 30.12.2022 CN 202211741005
(71) Applicant: NUCTECH COMPANY LIMITED, Beijing 100084 (CN); Tsinghua University, Haidian District, Beijing 100084 (CN)
(72) Inventor: CHEN, Zhiqiang, Beijing 100084 (CN); ZHANG, Li, Beijing 100084 (CN); HUANG, Qingping, Beijing 100084 (CN); LI, Yuanjing, Beijing 100084 (CN); FENG, Bo, Beijing 100084 (CN); ZHANG, Liguo, Beijing 100084 (CN); LI, Guipei, Beijing 100084 (CN); HE, Zhifeng, Beijing 100084 (CN)
(74) Representative: Winter, Brandl - Partnerschaft mbB
(86) International application number: PCT/CN2023/142757
(87) International publication number: WO 2024/140912

(57) **Abstract**

The present disclosure provides a diffraction detection apparatus, an inspection device, an inspection method and an inspection system. The diffraction detection apparatus includes a bracket, a diffraction radiation source, and a diffraction radiation detector, where the diffraction radiation detector and the diffraction radiation source define an inspection channel extending along a first direction, and the diffraction radiation detector is configured to receive diffracted radiation from an inspected object on the inspection channel to determine a characteristic of a substance causing diffraction. The bracket is configured to allow the diffraction radiation source and the diffraction radiation detector to move on the bracket across the inspection channel in a second direction, where the second direction is transverse to the first direction.

## Description

This application claims the benefit of Chinese Patent Application No. 202211741005.0 filed on December 30, 2022, the whole disclosure of which is incorporated herein by reference.

### TECHNICAL FIELD

The present disclosure relates to a field of detection technology, specifically, to a diffraction detection apparatus, an inspection device, an inspection method, and an inspection system.

### BACKGROUND

Current security inspection devices are capable of quickly inspecting items without opening or unboxing. The existing security inspection devices are generally in the form of radiographic imaging, with more advanced ones such as CT inspection devices.

### SUMMARY

The present disclosure provides a diffraction detection apparatus, including:
a bracket;
a diffraction radiation source; and
a diffraction radiation detector, where the diffraction radiation detector and the diffraction radiation source define an inspection channel extending along a first direction, and the diffraction radiation detector is configured to receive diffracted radiation from an inspected object on the inspection channel to determine a characteristic of a substance causing diffraction;
where the bracket is configured to allow the diffraction radiation source and the diffraction radiation detector to move on the bracket across the inspection channel in a second direction, where the second direction is transverse to the first direction.

In an embodiment, the diffraction radiation source and the diffraction radiation detector are configured to move on the bracket across the inspection channel in the second direction while remaining relatively stationary to each other; or
the diffraction radiation source and the diffraction radiation detector are configured to respectively move on the bracket across the inspection channel in the second direction to a specific position.

In an embodiment, the bracket includes:
a first track configured to support the diffraction radiation source and allow the diffraction radiation source to move along the first track; and
a second track configured to support the diffraction radiation detector and allow the diffraction radiation detector to move along the second track.

In an embodiment, the bracket further includes:
a first driving motor and a first lead screw, where the first driving motor drives the first lead screw to rotate by a certain amount, so that the first lead screw rotates to drive the diffraction radiation source to move a distance along the first track; and/or
a second driving motor and a second lead screw, where the second driving motor drives the second lead screw to rotate by a certain amount, so that the second lead screw rotates to drive the diffraction radiation detector to move a distance along the second track.

In an embodiment, the first track includes a first upper track and a first lower track, and the first lead screw is arranged between the first upper track and the first lower track; and
the second track includes a second upper track and a second lower track, and the second lead screw is arranged between the second upper track and the second lower track.

In an embodiment, the diffraction detection apparatus further includes a conveying device configured in the inspection channel to convey the inspected object through the inspection channel.

In an embodiment, a line connecting the diffraction radiation source and the diffraction radiation detector roughly passes through a part of the inspected object that requires diffraction detection.

In an embodiment, an inspection device is provided, including:
a transmission imaging apparatus configured to irradiate radiation towards an inspected object and construct a transmission image of the inspected object by inspecting transmission radiation; and
the diffraction detection apparatus described above, configured to irradiate radiation towards the inspected object and detect a characteristic of at least a part of the inspected object by inspecting radiation diffracted from the inspected object,
where the transmission imaging apparatus is configured to scan the inspected object on an inspection channel.

In an embodiment, the transmission imaging apparatus includes a transmission radiation source configured to emit the radiation; and a transmission radiation detector configured to receive radiation transmitted through the inspected object.

In an embodiment, a position of a suspected item is determined based on the transmission image of the inspected object constructed by the transmission imaging apparatus, and the diffraction detection apparatus moves across the inspection channel in a second direction to a position of a vertical projection of the suspected item of the inspected object onto the inspection channel.

In an embodiment, before a diffraction radiation source and a diffraction radiation detector move to a position for detecting the suspected item of the inspected object, the inspected object moves in a first direction so that the vertical projection of the suspected item on the inspection channel is located at the diffraction radiation detector on a first track and/or a second track.

According to an aspect of the present disclosure, an inspection method is provided, which is implemented using the inspection device described above, and the inspection method includes:
irradiating an inspected object by using radiation;
constructing a transmission image of the inspected object by detecting transmission radiation passing through the inspected object;
identifying an image portion of a suspected item corresponding to the suspected item in the transmission image;
determining a position of the suspected item in the inspected object based on a position of the image portion of the suspected item in the transmission image; and
moving a diffraction detection apparatus to a specific position to detect diffraction radiation from the suspected item, so as to determine a characteristic of the suspected item.

According to an aspect of the present disclosure, an inspection system is provided, including:
a CT inspection portion, including a CT machine, and the CT inspection portion is configured to inspect whether an inspected object contains a suspected item; and
a re-inspection portion, including the inspection device described above, and the re-inspection portion is configured to determine a characteristic of the suspected item.

### BRIEF DESCRIPTION OF THE DRAWINGS

The accompanying drawings are used for better understanding of the solution and do not constitute a limitation to the present disclosure. In the accompanying drawings:

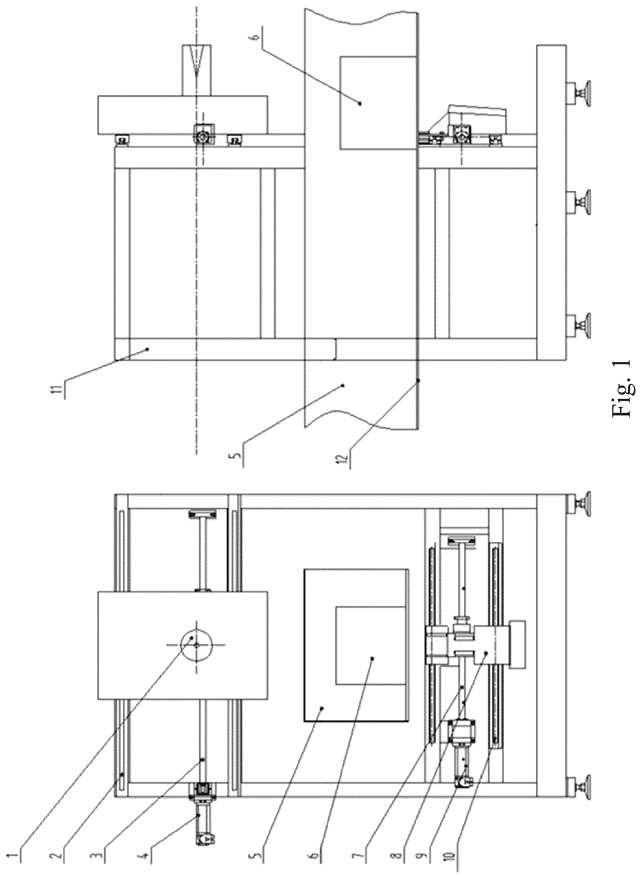

Fig. 1 shows a schematic diagram of a diffraction detection apparatus according to the embodiments of the present disclosure, with the left part being a front schematic diagram and the right part being a side schematic diagram.

### DETAILED DESCRIPTION OF EMBODIMENTS

To clarify the purpose, technical solution, and advantages of the present disclosure, the following will provide a detailed explanation of the embodiments of the present disclosure in conjunction with the accompanying drawings. It should be understood that the following description of the embodiments is intended to explain and illustrate the overall concept of the present disclosure, and should not be construed as a limitation of the present disclosure. In the specification and drawings, the same or similar reference numerals refer to the same or similar components or parts. For clarity, the accompanying drawings may not be drawn to scale, and some well-known components and structures may be omitted in the drawings.

Unless otherwise defined, the technical or scientific terms used in the present disclosure shall have their usual meanings as understood by persons with general skills in the field to which the present disclosure belongs. The terms "first", "second", and similar words used in the present disclosure do not indicate any order, quantity, or importance, but are only used to distinguish different components. The wording "a" or "one" does not exclude multiple options. Words such as "including" or "comprising" refer to the elements or objects that appear before the word include those listed after the word and their equivalents, without excluding other elements or objects. Words like "connection" or "connected" are not limited to physical or mechanical connections, but may include electrical connections, whether direct or indirect. Terms such as "up", "down", "left", "right", "top", or "bottom" are only used to represent relative positional relationships. When the absolute position of the described object changes, the relative positional relationship may also change accordingly. When an element such as layer, film, region, or substrate is referred to as being "above" or "below" another element, the element may be "directly" located "above" or "below" the other element, or there may be an intermediate element present.

The existing security inspection devices are generally based on radiographic imaging, with more advanced ones such as CT inspection devices. However, such devices still have the problem of being able to observe the general shape without fully determining whether the suspected item is prohibited. More sophisticated device is needed to more accurately determine whether the inspected object contains prohibited items.

Fig. 1 shows a diffraction detection apparatus according to an embodiment of the present disclosure. The diffraction detection apparatus includes a bracket 11, a diffraction radiation source 1, and a diffraction radiation detector 7. The diffraction radiation source 1 and the diffraction radiation detector 7 are supported by the bracket 11. The diffraction radiation detector 7 and the diffraction radiation source 1 define an inspection channel 5 extending along a first direction. The diffraction radiation detector 7 is configured to receive diffracted radiation from an inspected object 6 on the inspection channel 5 to determine a characteristic of the substance that diffracts the radiation. Here, the substance that causes radiation diffraction may be suspected items such as prohibited items, like suspected items in a luggage. Since the suspected items cannot be seen with naked eyes and it is inconvenient to open the luggage, a diffraction detection apparatus is needed to identify whether the suspected items belong to prohibited items. The inspection channel 5 may be a space where the inspected object may be inspected. In the inspection channel 5, a container or equipment such as a conveyor belt or a conveyor box may be provided for transportation.

In the embodiment of the present disclosure, the bracket 11 is configured to allow the diffraction radiation source 1 and the diffraction radiation detector 7 to move on the bracket 11 across the inspection channel 5 in a second direction, which is transverse to the first direction.

In one embodiment of the present disclosure, a bracket 2 is configured to allow the diffraction radiation source 1 and the diffraction radiation detector 7 to move in a second direction across the inspection channel 5 on the bracket 2 while remaining relatively stationary to each other. Here, "remaining relatively stationary to each other" means that the movement of the diffraction radiation source 1 and the diffraction radiation detector 7 is synchronized.

In another embodiment of the present disclosure, the bracket 2 is configured to allow the diffraction radiation source 1 and the diffraction radiation detector 7 to respectively move on the bracket 2 across the inspection channel 5 in the second direction. This refers to a situation that the diffraction radiation source 1 and the diffraction radiation detector 7 do not need to move simultaneously, at the same speed, from the same starting point, or maintain a fixed positional relationship with each other. They only need to move respectively to specific positions to allow diffraction detection to be completed. According to the embodiments of the present disclosure, the specific positions here refer to positions at which a line connecting the diffraction radiation source 1 and the diffraction radiation detector 7 roughly passes through a part of the inspected object 6 that requires diffraction detection, thus completing the diffraction radiation. It should be noted that it is not necessary for the line connecting the diffraction radiation source 1 and the diffraction radiation detector 7 to strictly pass through the part of the inspected object 6 that requires diffraction detection. In one embodiment of the present disclosure, the diffraction radiation source 1 and the diffraction radiation detector 7 are configured to align along a vertical direction, and a crystal in the diffraction radiation detector is configured in this arrangement. In this case, the specific position represents that the diffraction radiation detector 7 is located at a position of a projection of the part of the inspected object 6 that needs to perform diffraction detection in the vertical direction on the inspection channel. It should be noted that in other embodiments of the present disclosure, without aligning the diffraction radiation source 1 and the diffraction radiation detector 7 in the vertical direction, the diffraction detection may also be achieved. Therefore, in the present disclosure, the specific positions also mean that when the diffraction radiation source 1 and the diffraction radiation detector 7 are located at the specific positions, the diffraction radiation emitted by the diffraction radiation source 1 after illuminating the part of the inspected object 6 that requires diffraction detection will be received by the diffraction radiation detector.

In one embodiment, the bracket 11 includes a first track 2 configured to support the diffraction radiation source 1 and allow the diffraction radiation source 1 to move along the first track 2, and a second track configured to support the diffraction radiation detector 7 and allow the diffraction radiation detector 7 to move along the second track.

The first track 2 and the second track 10 cross the inspection channel 5 in the second direction. In the embodiment shown in Fig. 1, the first track 2 is located at an upper part of the bracket 11, and the second track 10 is located at a lower part of the bracket 11. The first track 2 may be a dual track structure, including a first upper track and a first lower track. The diffraction radiation source 1 is supported on the first upper track and the first lower track, which may more stably support the diffraction radiation source. However, the first track 2 may be set as a single track. The second track 10 may be a dual track structure, including a second upper track and a second lower track. The diffraction radiation detector 7 is supported on the second upper track and the second lower track, which may more stably support the diffraction radiation detector 7. However, the second track 10 may be set as a single track.

The diffraction detection apparatus may further include a first driving motor 4 and a first lead screw 3. The first driving motor 4 drives the first lead screw 3 to rotate by a certain amount, so that the lead screw may rotate to drive the diffraction radiation source 1 to move a distance along the first track 2.

The diffraction detection apparatus may also include a second driving motor 9 and a second lead screw 7. The second driving motor 9 drives the second lead screw 7 to rotate by a certain amount, so that the lead screw may rotate to drive the diffraction radiation detector 7 to move the distance along the second track 10.

The diffraction radiation source 1 may include a diffraction radiation source bracket 11 for supporting the diffraction radiation source 1. An upper end of the diffraction radiation source bracket 11 is supported on the first upper track and a lower end of the diffraction radiation source bracket 11 is supported on the first lower track. The diffraction radiation source bracket 11 also includes a first sleeve, which may be located at the lower part of the diffraction radiation source bracket 11 and fitted with the first lead screw 3 (as shown in Fig. 1, the first lead screw 3 is shown as being located between the first upper track and the first lower track, but this is not necessary). The first sleeve moves from left to right or from right to left according to the rotation direction of the first lead screw 3. The first driving motor 4 rotates the first lead screw 3 by a specific number of turns based on the position of the suspected item. The number of turns of the first lead screw 3 determines the movement distance of the first sleeve, which is also the movement of the diffraction radiation source bracket 11. Here, there is a linear correspondence between the number of turns of the first driving motor 4 and the position of the suspected item in the transverse direction of the inspection channel 5.

The diffraction radiation source 1 may include a diffraction detector bracket 11 for supporting the diffraction detector. An upper end of the diffraction detector bracket 11 is supported on the second upper track and a lower end of the diffraction detector bracket 11 is supported on the second lower track. Similarly, the diffraction detector bracket 11 may include a second sleeve, which is fitted with a second lead screw 7 (as shown in Fig. 1, the second lead screw 7 is shown as being located between the second upper track and the second lower track, but this is not necessary). When the second lead screw 7 rotates, the second sleeve moves from left to right or from right to left according to the rotation direction of the second lead screw 7. The second driving motor 9 rotates the second lead screw 7 by a specific number of turns based on the position of the suspected item. The number of turns of the second lead screw 7 determines the movement distance of the second sleeve, which is also the movement of the diffraction detector bracket 11. Similarly, there is a linear correspondence between the number of turns of the second driving motor 9 and the position of the suspected item in the transverse direction of the inspection channel 5.

In the embodiments of the present disclosure, the first track 2 and the second track 10 may be slide tracks, toothed racks, or lead screws. The diffraction radiation source bracket 11 and the diffraction detector bracket 11 may be driven by a screw through a sleeve, or equipped with gears that mesh with teeth on the first track 2 and the second track 10, respectively. By driving the gears to rotate through the first driving motor 4 and the second driving motor 9, the diffraction radiation source bracket 11 and the diffraction detector bracket 11 may move on the first track 2 and the second track 10, respectively. Other embodiments of the present disclosure also include other equipment driving the diffraction radiation source 1 and diffraction detector to move across the inspection channel 5, as long as both the diffraction radiation source 1 and the diffraction detector may be moved.

In the embodiment shown in Fig. 1, the inspection channel 5 is depicted as a space passing through the diffraction detection apparatus in the first direction, with a rectangular cross-section, indicating that the inspected object 6 may be located within this space and may freely move in the first direction, but this does not mean that such rectangular component exist. In addition, in the inspection channel 5 shown in Fig. 1, equipment such as a conveyor belt 12 and a conveyor frame (not shown) may be provided for transporting the inspected object 6.

The present disclosure discloses an inspection device including a transmission imaging apparatus and the diffraction detection apparatus described above. The transmission imaging apparatus and the diffraction detection apparatus may be supported by the bracket 11. In the diffraction detection apparatus shown in Fig. 1, the transmission imaging apparatus may be placed close to the diffraction detection apparatus in the first direction or spaced apart by a predetermined distance. The transmission imaging apparatus is configured to irradiate radiation towards the inspected object 6 and construct a transmission image of the inspected object 6 by inspecting transmitted radiation. The diffraction detection apparatus is configured to irradiate radiation towards the inspected object 6 and detect a characteristic of at least a part of the inspected object 6 (such as a suspected item) by inspecting the radiation diffracted from the inspected object 6. In the embodiment, the diffraction radiation detector 7 and the diffraction radiation source 1 define the inspection channel 5 extending along the first direction. However, it may also be considered that the inspection channel 5 is defined by the transmission imaging apparatus. In other words, the transmission imaging apparatus and the diffraction detection apparatus may jointly define the inspection channel 5.

The inspected object 6 may be moved on the inspection channel 5, so that the inspected object 6 may be scanned by the transmission imaging apparatus. In the embodiment, the transmission imaging apparatus may be fixed on the bracket 11. In one embodiment, the transmission imaging apparatus includes a transmission radiation source and a transmission radiation detector, configured such that the transmission radiation source irradiates radiation towards the inspected object 6, and the transmission radiation detector receives the radiation transmitted through the inspected object 6 so as to be able to construct a transmission image of the inspected object 6. The transmission radiation source and the transmission radiation detector may be fixed on the bracket 11, for example, the transmission radiation source is fixed on the top of the bracket 11, and the transmission radiation detector is fixed on the bottom of the bracket 11. In another embodiment, the configuration is reversed, with the transmission radiation source fixed at the bottom of the bracket 11 and the transmission radiation detector fixed at the top of the bracket 11. In one embodiment, the transmission imaging apparatus may share the diffraction radiation source of the diffraction detection apparatus, which may reduce the radiation source, lower device costs, and simplify the structure. The diffraction radiation source may move freely on the bracket 11 and may be used as a radiation source for the transmission imaging apparatus. In this case, the transmission radiation detector may be fixed, while the diffraction radiation source may be moved. The transmission imaging apparatus may complete the imaging operation with the diffraction detection apparatus in the same cross-section (of the inspected object 6) illuminated by the radiation beam. This is advantageous as diffraction detection may be performed in situ when the suspected item is scanned by the transmission imaging apparatus, i.e. stopping the transportation of the inspected object 6 and moving the diffraction detection apparatus to the vicinity of the suspected item for diffraction detection.

In the embodiments of the present disclosure, the diffraction detection apparatus may be moved, for example, laterally along the inspection channel 5 to a specific position to detect diffraction radiation. In the present disclosure, the diffraction detection apparatus may be moved to a specific position to complete the measurement of diffraction radiation, so there is no need to arrange a row of diffraction detection detectors (in the transverse direction) across the inspection channel 5, which greatly reduces the cost of the device. The specific position refers to a position where the line connecting the diffraction radiation source and the diffraction radiation detector passes through the part that requires diffraction detection.

In one embodiment of the present disclosure, the position in the first direction is represented by the X-axis coordinates, and the position in the second direction is represented by the Y-axis coordinates. When a position of (0,0) is determined (e.g., the position of a lower left corner of the inspection channel 5 in the left part of Fig. 1 is the origin), the position of the two-dimensional plane determined by the first and second directions in the inspection channel 5 shown in Fig. 1 may be represented by two-dimensional coordinates. The transmission imaging apparatus scans the inspected object 6 that is moving on the inspection channel 5, and constructs a transmission image of the inspected object 6. By observing the scanned transmission image (which may be manually observed or automatically detected by software using a computer), the part of the suspected item in the transmission image is identified and its x and y coordinates are determined. Since some suspected items may have irregular shapes or composition of the suspected items may cause the image to be not clear, simply relying on transmission images cannot determine what kind of object the suspected item is, and further detection is needed. In this case, based on the x and y coordinates of the suspected item, the inspected object 6 is moved so that the coordinates of the suspected item become (0, y) (located on the projection of the first track 2 and the second track 10 in the vertical direction on the inspection channel 5). Then, the diffraction detection apparatus with an x coordinate value of 0 is moved to the (0, y) position, and the diffraction radiation source 1 is used to irradiate the part of the suspected item. The diffraction detector receives the radiation diffracted by the suspected item, thereby detecting the characteristics of the suspected item, such as the atomic coefficient of the suspected item, the composition of the suspected item, etc., thereby achieving the confirmation of whether the inspected object 6 contains prohibited items again without opening the package.

In the embodiments of the present disclosure, the transmission imaging apparatus and the diffraction detection apparatus may each have a radiation source. For example, the diffraction detection apparatus may have a diffraction radiation source 1, and the transmission imaging apparatus may have a transmission radiation source. The two radiation sources may have the same type, or different types may be configured as needed. The radiation source and the transmission radiation detector of the transmission imaging apparatus cooperate to complete transmission scanning, and the radiation source and the diffraction radiation detector 7 of the diffraction detection apparatus cooperate to complete diffraction detection.

In another embodiment of the present disclosure, the transmission imaging apparatus and the diffraction detection apparatus may have a common radiation source. In the embodiment, as shown in Fig. 1, the diffraction radiation source 1 irradiates a radiation beam towards the inspected object 6, and the transmission radiation detector detects the transmission radiation, thereby achieving scanning of the moving inspected object 6. When a suspected item is found in the inspected object 6, the inspected object 6 is stopped. At this time, the x value of the suspected item is 0, so there is no need to move the inspected object 6. The diffraction detector is simply moved to complete the diffraction detection. In the embodiment, the transmission radiation detector may be located within the projection range of the radiation source together with the diffraction radiation detector 7. Fig. 1 does not show the configuration of the embodiment.

In the present disclosure, "characteristic" includes the atomic coefficients, structural composition, or other properties of a substance that correspond to its intrinsic characteristics. The technology for detecting the characteristics of substances based on their diffraction is known, and will not be described in detail here. The diffraction radiation detector 7 disclosed in the present disclosure may operate using existing diffraction detection principles.

In the embodiments of the present disclosure, specific positions may allow the diffraction radiation source 1 to irradiate the suspected item, and the diffraction radiation detector 7 may detect the diffracted radiation to determine the characteristics of the suspected item. The radiation emitted by diffraction radiation source 1 irradiates the suspected item, and after diffraction by the suspected item, it generally continues to propagate along the direction of irradiating the suspected item. A radiation receiving surface of the diffraction radiation detector 7 receives the diffracted radiation. Here, the diffracted radiation is incident in a normal direction of the radiation receiving surface, meeting the detection requirements of the diffraction detection apparatus (involving conditions such as diffraction angle that are well-known to those skilled in the art, which will not be discussed here). In the embodiment shown in Fig. 1, the diffraction radiation source 1 and the diffraction radiation detector 7 may be arranged generally in the vertical direction and configured to move laterally across the inspection channel 5. In one embodiment of the present disclosure, when the diffraction radiation source 1 and the diffraction radiation detector 7 are aligned in the vertical direction, the radiation receiving surface of the crystal in the diffraction radiation detector 7 has been adjusted in advance. Therefore, as long as the diffraction radiation source 1 and the diffraction radiation detector 7 are arranged in the vertical direction, the diffraction radiation detector 7 may achieve detection without any adjustment. Those skilled in the art understand that the crystal in the diffraction radiation detector 7 needs to meet a certain diffraction angle in order to complete the detection. However, in the embodiments of the present disclosure, the diffraction angle has already been adjusted in advance, and even specific corrections are completed. Therefore, there is no need to adjust the orientation of the diffraction radiation detector 7 or perform calibration operations during the diffraction detection process, which greatly improves the convenience of the detection device.

In addition, due to the linear translational motion of both the diffraction radiation source 1 and the diffraction radiation detector 7 during the diffraction detection process, the distance between the diffraction radiation source 1 and the diffraction radiation detector 7 remains constant, and the intensity of the diffracted radiation is roughly equivalent, which is conducive to improving the accuracy of determining the characteristics of the suspected item during the detection process.

In the embodiments of the present disclosure, the transmission radiation detector is not shown. However, it should be noted that the transmission radiation detector may have a desired arrangement and shape, such as an "L" shape, or be composed of multiple small transmission radiation detection units. The transmission radiation detector is arranged on an opposite side of the transmission radiation source on the bracket 11, and does not conflict with the diffraction radiation detector 7.

In the embodiments of the present disclosure, the transmission radiation source is intended to include a collimator, so that the transmission radiation source may emit a radiation beam, such as a fan-shaped surface beam. The transmission radiation detector is intended to include a rear collimator for eliminating interference from stray radiation.

One aspect of the present disclosure provides an inspection method, which may be implemented using the inspection device in the above embodiments. The method includes:
irradiating the inspected object 6 by using radiation;
constructing a transmission image of the inspected object 6 by detecting transmission radiation passing through the inspected object 6;
identifying an image portion of a suspected item corresponding to the suspected item in the transmission image;
determining a position of the suspected item in the inspected object 6 based on a position of the image portion of the suspected item in the transmission image; and
moving the diffraction detection apparatus to a specific position to detect diffraction radiation from the suspected item, so as to determine a characteristic of the suspected item.

One aspect of the present disclosure provides an inspection system, including:
a CT inspection portion, including a CT machine, and the CT inspection portion is configured to inspect whether the inspected object 6 contains a suspected item; and
a re-inspection portion, including the inspection device described in any of the previous embodiments, configured to determine the characteristic of the suspected item, such as atomic coefficient, composition, etc.

In one embodiment, the inspection channel 5 defined by the re-inspection portion may be connected to the inspection channel 5 of the CT inspection portion. In another embodiment, the inspection channel 5 defined by the re-inspection portion may not be connected to the inspection channel 5 defined by the CT inspection portion.

In one embodiment, after being inspected by the CT inspection portion, the inspected object 6 that does not contain any suspected item is released, and the inspected object 6 that contains a suspected item is transferred to the re-inspection portion.

In one embodiment, the inspection device moves in a first direction and scans the inspected object 6 containing the suspected item through the transmission imaging apparatus, and based on the position of the suspected item determined by the transmission image, the diffraction detection apparatus is used to further detect the characteristic of the suspected item.

When the inspected object 6 passes through the CT inspection portion, the CT inspection portion may obtain a 3D image of the inspected object 6, thereby enabling the inspection of whether the inspected object 6 contains prohibited items without opening the package. When the inspected object 6 does not contain prohibited items, the inspected object 6 is released. When the 3D image of the inspected object 6 shows that it may contain prohibited items, that is, a portion of the image has been identified as a suspected item (which cannot be confirmed as a prohibited item yet), the inspected object 6 will be transferred to the re-inspection portion. In the re-inspection portion, the inspected object 6 is scanned by a transmission detection device to determine the position of the suspected item in the inspected object 6. Then, the diffraction detection apparatus may be moved to the specific position mentioned above to detect the suspected item and determine the characteristics of the suspected item, such as explosives, firearms, drugs, or others. In the embodiment, due to the installation of a transmission detection device, it is possible to re-detect the inspected object 6, improve the accuracy of the inspection, and also determine the position of the suspected item on the inspected object 6. Furthermore, the diffraction detection apparatus in the embodiment is movable, so there is no need to deploy diffraction detection units or detectors across the inspection channel 5, which may reduce the number of diffraction detectors or sensors and lower the cost of the entire device and system. Furthermore, it is possible to achieve re-inspection without opening the package, improving accuracy and efficiency.

The above describes multiple embodiments of the present disclosure, however, it should be understood that these embodiments are only examples and not all embodiments of the present disclosure, and are only for the purpose of demonstrating the principles of the present disclosure and not to limit the present disclosure. The description of the above embodiments may have emphasis, but different embodiments may be combined based on the description of the present disclosure to derive other embodiments of the present disclosure.

## Claims

1. A diffraction detection apparatus, comprising:
a bracket;
a diffraction radiation source; and
a diffraction radiation detector, wherein the diffraction radiation detector and the diffraction radiation source define an inspection channel extending along a first direction, and the diffraction radiation detector is configured to receive diffracted radiation from an inspected object on the inspection channel to determine a characteristic of a substance causing diffraction;
wherein the bracket is configured to allow the diffraction radiation source and the diffraction radiation detector to move on the bracket across the inspection channel in a second direction, wherein the second direction is transverse to the first direction.

2. The diffraction detection apparatus according to claim 1, wherein
the diffraction radiation source and the diffraction radiation detector are configured to move on the bracket across the inspection channel in the second direction while remaining relatively stationary to each other; or
the diffraction radiation source and the diffraction radiation detector are configured to respectively move on the bracket across the inspection channel in the second direction to a specific position.

3. The diffraction detection apparatus according to claim 1, wherein the bracket comprises:
a first track configured to support the diffraction radiation source and allow the diffraction radiation source to move along the first track; and
a second track configured to support the diffraction radiation detector and allow the diffraction radiation detector to move along the second track.

4. The diffraction detection apparatus according to claim 3, wherein the bracket further comprises:
a first driving motor and a first lead screw, wherein the first driving motor drives the first lead screw to rotate by a certain amount, so that the first lead screw rotates to drive the diffraction radiation source to move a distance along the first track; and/or
a second driving motor and a second lead screw, wherein the second driving motor drives the second lead screw to rotate by a certain amount, so that the second lead screw rotates to drive the diffraction radiation detector to move a distance along the second track.

5. The diffraction detection apparatus according to claim 4, wherein the first track comprises a first upper track and a first lower track, and the first lead screw is arranged between the first upper track and the first lower track; and
the second track comprises a second upper track and a second lower track, and the second lead screw is arranged between the second upper track and the second lower track.

6. The diffraction detection apparatus according to claim 1, further comprising a conveying device configured in the inspection channel to convey the inspected object through the inspection channel.

7. The diffraction detection apparatus according to claim 1, wherein a line connecting the diffraction radiation source and the diffraction radiation detector roughly passes through a part of the inspected object that requires diffraction detection.

8. An inspection device, comprising:
a transmission imaging apparatus configured to irradiate radiation towards an inspected object and construct a transmission image of the inspected object by inspecting transmission radiation; and
the diffraction detection apparatus according to any one of claims 1 to 7, configured to irradiate radiation towards the inspected object and detect a characteristic of at least a part of the inspected object by inspecting radiation diffracted from the inspected object,
wherein the transmission imaging apparatus is configured to scan the inspected object on an inspection channel.

9. The inspection device according to claim 8, wherein the transmission imaging apparatus comprises:
a transmission radiation source configured to emit the radiation; and
a transmission radiation detector configured to receive radiation transmitted through the inspected object.

10. The inspection device according to claim 9, wherein a position of a suspected item is determined based on the transmission image of the inspected object constructed by the transmission imaging apparatus, and the diffraction detection apparatus moves across the inspection channel in a second direction to a position of a vertical projection of the suspected item of the inspected object onto the inspection channel.

11. The inspection device according to claim 10, wherein before a diffraction radiation source and a diffraction radiation detector move to a position for detecting the suspected item of the inspected object, the inspected object moves in a first direction so that the vertical projection of the suspected item on the inspection channel is located at the diffraction radiation detector on a first track and/or a second track.

12. An inspection method, implemented using the inspection device according to any one of claims 8 to 11, the inspection method comprising:
irradiating an inspected object by using radiation;
constructing a transmission image of the inspected object by detecting transmission radiation passing through the inspected object;
identifying an image portion of a suspected item corresponding to the suspected item in the transmission image;
determining a position of the suspected item in the inspected object based on a position of the image portion of the suspected item in the transmission image; and
moving a diffraction detection apparatus to a specific position to detect diffraction radiation from the suspected item, so as to determine a characteristic of the suspected item.

13. An inspection system, comprising:
a CT inspection portion, comprising a CT machine, and the CT inspection portion is configured to inspect whether an inspected object contains a suspected item; and
a re-inspection portion, comprising the inspection device according to any one of claims 8 to 11, and the re-inspection portion is configured to determine a characteristic of the suspected item.

14. The inspection system according to claim 13, wherein after being inspected by the CT inspection portion, the inspected object that does not contain any suspected item is released, and the inspected object that contains the suspected item is transferred to the re-inspection portion.

15. The inspection system according to claim 14, wherein the inspection device moves in a first direction and scans the inspected object containing the suspected item through a transmission imaging apparatus, and based on a position of the suspected item determined by a transmission image, a diffraction detection apparatus is used to further detect the characteristic of the suspected item.
